# EUROPEAN PATENT APPLICATION

(11) **EP 2 266 676 A1**
(43) Date of publication of application: **29.12.2010**
(21) Application number: 09447027.5
(22) Date of filing: 26.06.2009
(51) Int. Cl.: B01D 17/02, B01D 19/00, B01D 21/00, B01D 45/08, E03F 5/00, E21B 43/34

(54) **Phase separator**

(71) Applicant: Universiteit Antwerpen, 2000 Antwerpen (BE); Karel de Grote-Hogeschool,Katholieke Hogeschool Antwerpen vzw, 2018 Antwerpen (BE)
(72) Inventor: Vandenbulcke, Roel, 2000 Antwerpen (BE)
(74) Representative: Van hunsel, Lieven M.S.

(57) **Abstract**

Phase separator comprising a housing (2) with an inlet (5) for a multi-phase mixture, a first outlet (6) and a second outlet (7), where inside said housing (2) are provided partition walls (8) providing in the space enclosed by the said housing (2) different zones respectively, an inlet zone (9), at least one intermediate zone (10) between two of said walls (8), and an outlet zone (11), whereby each of said walls (8) is provided with at least one opening (12), the circumferential edge of each of said openings (12) in mainly all directions being positioned at a distance (D) from the circumferential edge of the wall (8) through which these openings (12) extend.

## Description

The present invention relates to a phase separator.

Phase separators are already applied in different fields of technology such as for the removal of gas from a liquid stream and/or for de-sludging purposes, for example in central heating systems.

It is generally known in HVAC-technology (HVAC stands for Heating, Ventilation and Air Conditioning) that the presence of gasses and dirt particles in the fluid flow of the HVAC-system often leads to numerous problems such as corrosion, reduced efficiency and accelerated wear of components.

Gasses in central heating installations can appear in the form of dissolved gasses and in the form of free gas bubbles. The free gas bubbles appear both in the form of large bubbles which often accumulate in so-called death zones in the fluid flow, and in the form of so-called micro-bubbles appearing in the circulating fluid.

While big stationary gas bubbles can often be removed from for example a central heating installation by means of a purging valve, the micro-bubbles appearing in the circulating fluid are often much more difficult to remove and also often lead to corrosion related problems.

Micro-bubbles may cause various problems in HVAC installations.

In very quiet areas, for example in radiators, the micro-bubbles may rise and combine into large stationary bubbles resulting in a reduced heath exchange. Such combined micro-bubbles in a radiator, and also when present in the piping or other components of an installation, cause an annoying sound.

Micro-bubbles may also disturb the flow as a result of which the hydraulic characteristics of the installation can no longer be controllers in an appropriate way.

Micro-bubbles have abrasive and scouring impact on piping and installation components.

Further, the presence of micro-bubbles raises the chance on detrimental cavitation in the pump, which is called pseudo-cavitation.

At last, micro-bubbles are often collected in the centre of the pump due to centrifugal forces where heavier water is forced to the outer regions as a consequence of which the lighter bubbles are oppressed to the centre of the pump. Because of this, the axis of the pump is no longer cooled and lubricated in a sufficient way and the pump is said to run dry. This effect often leads to burned pump axis.

Iron(II, III)oxide particles (Fe₃O₄ or Magnetite) which is being formed in central heating installations due to the presence of oxygen in the water of a central heating installation can stick to the permanent magnets of a circulation pump which leads to premature wear of the bearings. Additionally, magnetite is an abrasive compound which also has negative impact on the lifespan of seals provided in the pump.

In addition to all of the above-mentioned disadvantages, the presence of micro bubbles and dirt particles in the fluid flow of a central heating or a cooling installation could lead to decreased heat radiation of radiators, decreased boiler efficiency, pipe obstructions and other disadvantages.

In an attempt to solve the above-mentioned problems, separating devices are already known, e.g. as described in European patent application No. 0.391.484, such separating device comprising a housing designed for placement in a liquid circulation system, said housing having an inlet and an outlet for a liquid to be degassed. The internal space of said housing is at least partially filled with an unstructured insert, such as open filling elements, for example in the shape of hollow cylindrical elements. At the top side of the housing is provided a valve for discharge of separated gas.

A disadvantage of such known separating devices is that they show a rather complex construction. Also, these separating devices do not show means allowing to drain dirt particles which will accumulate where the filling elements are situated so that they cannot be separated. Still another disadvantage of these known devices is that they are relatively expensive, heavy, and difficult to maintain due to the presence of the many filling elements.

Furthermore, the presence of the filling elements leads to a relatively complex construction and time consuming construction of the device.

Alternatively there are also separators which are provided with a structured insert such as a brush or tensioned wire, for example as described in WO 97/10037.

In these types of separators, gas bubbles are caught on the brushes or wires and rise, while trapped sludge falls to the floor ot the housing to be drained there from by means of a drain opening.

Practice has shown that such separators lead to a rather poor efficiency and show the disadvantage that they are difficult and expensive to manufacture.

The efficiency of such known devices is far from optimal as, upon entering the separator, the flow collides with the insert material so that dirt particles and micro bubbles are getting an upward, as well as a downward impulse. An upward impulse on the dirt particles negatively affects the efficiency as they should be impelled downwardly. Accordingly, the downward impulse on the micro bubbles negatively affects the bubble separation efficiency.

CH 589 462 relates to a device for separating big gas bubbles from a liquid stream, said device consisting of a housing being provided on lop of a pipe, said housing enclosing a chamber being formed integrally with a duct through which said liquid stream flows and inside said housing being provided a number of walls, the lower edge of each of said walls being positioned above or at the same height as the top side of said duct. Part of the liquid stream flowing through the duct will flow through the chamber passed said walls. Big air bubbles which would be carried along by the liquid flow might get stuck between two walls and can therefore accumulate in said chamber to be blown off from there.

A disadvantage of such device according to CH 589 462 is that it only allows to remove big gas bubbles, situated at the upper side of the liquid flow, but that micro bubbles being carried along in the main liquid stream will not get trapped between the plates. Also, the liquid flow has to be quite slow to allow gas bubbles to rise between the plates to be blown-off, resulting in that such device cannot be used for example in central heating installations. Additionally, such device does not allow to remove solid particles from a liquid stream as there are not provided any means for doing so.

The invention aims to remedy one or several of the above-mentioned and other disadvantages and relates to a phase separator comprising a housing with an inlet for a multi-phase mixture, a first outlet for removal of a first separated phase and a second outlet for removal of a second separated phase, where inside said housing are provided at least two partition walls providing in the space enclosed by said housing different zones, respectively, an inlet zone in which said inlet gives out, at least one intermediate zone between two of said at least two walls, in which intermediate zone said first outlet gives out, and an outlet zone in which said second outlet gives out, whereby, according to the invention, each of said walls is provided with at least one opening forming a flow-through passage for the main stream of the multi-phase mixture from the inlet to the second outlet, the circumferential edge of the at least one opening for at least 75% of its total or added up length being positioned at a distance from the circumferential edge of the wall through which these openings extend.

The wording "at a distance" needs to be interpreted as meaning a distance which is greater than zero.

The opening or openings in the partition walls are in other words in general and/or mainly positioned at a distance from the circumferential edge of the partition wall in which they are provided.

According to a preferred embodiment, the circumferential edge of each of said openings is in all directions being positioned at a distance from the circumferential edge of the wall through which these openings extend, hereafter for the readability sometimes referred to as "core openings".

In such preferred embodiment, said openings are completely surrounded over 360° by a part of the respective wall through which they extend.

In order to incorporate alternative embodiments which have the ambition to obtain the same or similar effect as obtained by the last described preferred embodiment, the circumferential edge ot the at least one opening is said to at least for 75% of its total or added up length being positioned at a distance from the circumferential edge of the wall through which these openings extend.

Indeed, by adding one or more slots, cut-aways, or peripheral openings or the like as hereafter explained, to an embodiment provided of only one or more core openings, one would end up with an embodiment with similar effects.

Indeed, it is clear that embodiments providing one or more slots or cut-aways over a section of up to 90° around a core opening, extending from the one or more core openings up to the circumferential edge of the wall through which these openings are provided, are considered as part of the present invention.

It is also clear that also embodiments to which, apart from the one or several core openings, one or more "peripheral openings" are added, i.e. openings of which the circumferential edge partially coincides or joins up with the circumferential edge of the wall through which these openings extend, are considered as part of the present invention.

For the readability of the description, no further reference will be made to these alternative embodiments provided of one or more slots, cut-aways, or peripheral openings or the like.

Due to the specific construction of a phase separator according to the invention, a multi-phase mixture entering the space enclosed by the housing will flow into the inlet zone and subsequently into the intermediate zone through the opening in a first of said walls being provided between said inlet zone and said intermediate zone.

In the intermediate zone, part of the multi-phase mixture will end up in a so-called quiet flow zone or in other words in a zone situated between two of said walls, in which zone the flow speed of the mixture is lower than the flow speed of the main stream flowing centrally through the openings in the partition walls.

As the mixture slows down in the quiet flow zones, for example gas bubbles and micro-bubbles in a liquid-gas mixture have a chance to rise to the top of the phase separator and/or dirt particles have a chance to sink to the bottom of the phase separator, allowing thus to remove either said collected gas, said collected dirt particles, or both. The same is equally true for other multi-phase mixtures, for example in the form of a mixture of a gas with solid particles, a mixture of a gas with liquid drops and other multi-phase mixtures.

Due to the fact that said quiet flow zone completely surrounds the central passage in the phase separator, a very effective separation can be achieved. Due to the 360° concept of a phase separator according to the present invention, an upwardly directed impulse or an impulse at the higher regions of the main stream, on a phase with density higher than the density of the main stream, does not necessary result in a re-absorption of this phase in the main stream.

In a similar way, a downwardly directed impulse or an impulse at the lower regions of the main stream, on a phase with lower density as compared to the density ot the main stream, does not necessary result in a re-absorption of this phase in the main stream.

As an example, dirt particles in a water stream impacted upwardly and/or dirt particles which are present near the upper side of the main stream can still be collected as they have the chance to settle around the main passage towards the corresponding outlet near the bottom of the phase separator when in use.

In a similar way, also air bubbles in a water stream impacted downwardly and/or air bubbles which are present near the bottom side of the main stream can still be collected as they have the chance to rise around the main passage towards the corresponding outlet near the top of the phase separator when in use.

The phase separator according to the invention allows the removal of phases from a main stream to take place over 360° around the main stream and/or of phases redirected by means of an impulse in any direction. This differs substantially from traditional phase separators which only allow for example to remove gas bubbles from a liquid stream on the top side of this stream or to remove solid particles only on the bottom side of a main stream.

The construction of a phase separator according to the invention is very simple and easy and cheap to manufacture compared to classic separators, e.g. for the removal of micro-bubbles from a water stream. Also, due to the simple construction, such phase separator according to the invention is easy to handle as it can show minimum weight and space.

Since the gas and/or dirt particles are removed from the main stream, without being able to block this main stream, a phase separator according to the invention also shows the advantage that it does not lead to an increased pressure drop, even after being in use for a longer period of time.

According to a preferred form of embodiment, a phase separator according to the invention is provided with one or more further outlets which give out into said intermediate zone.

The advantage thereof is that such a phase separator allows to separated three or more different phases, for example a gas phase, a liquid phase and a solid phase, which could be the case for example in HVAC-installations.

With the intention of better showing the characteristics of the invention, hereafter, as an example without being limitative in any way, some preferred forms of embodiment of a phase separator according to the invention will be described, reference being made to the enclosed drawings, wherein:
figure 1 schematically represents a sectional view of a phase separator according to the invention;
figure 2 represents a cross-section according to line II-II in figure 1;
figure 3 represents in a cross sectional view a variant of a phase separator according to figure 1;
figure 4 represents a cross section according to line IV-IV in figure 3;
figure 5 represents a schematic and perspective view of a variant of the part indicated in figure 3 by arrow F5;
figure 6 represents an assembly of several elements according to figure 5;
figure 7 represents another embodiment of an element according to figure 5;
figures 8 and 9 represent alternative embodiments of a phase separator according to the invention;
figure 10 shows a comparative graphical representation of the separation efficiency as a function of the particle size for several phase separators of the prior art and a phase separator according to the present invention.

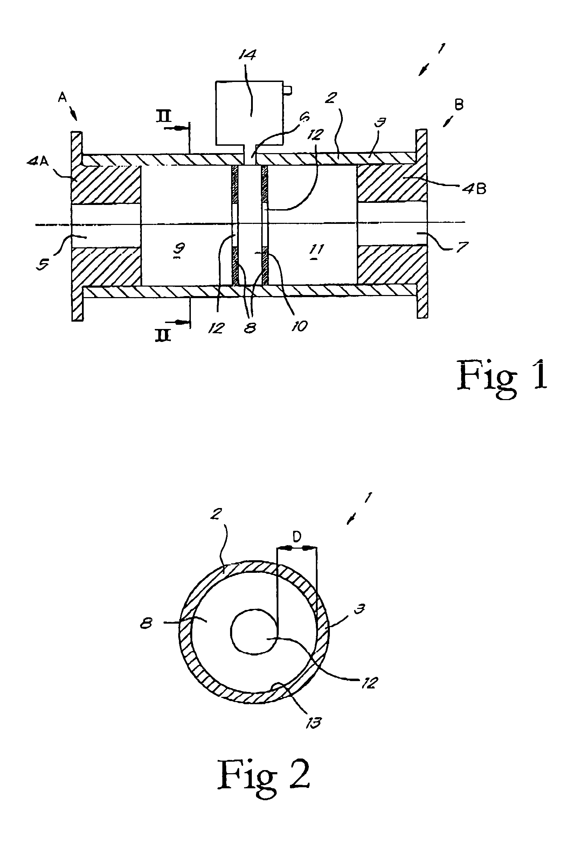

In figures 1 and 2 is represented a phase separator 1 according to the invention, said phase separator 1 mainly being composed of a housing 2 which in this case is realized in the form of a tubular casing 3 being closed off on its respective ends A and B by means of a flange shaped end wall 4A and 4B, thus enclosing a space inside said housing 2.

Said phase separator 1 is provided with an inlet 5 for a multi-phase mixture, said inlet 5 extending through said first end wall 4A. Said phase separator 1 is also provided with a first outlet 6 for removal of a first separated phase and with a second outlet 7 for removal of a second separated phase.

In this case said first outlet 6 extends through the tubular casing 3 and said second outlet 7 extends through said second end wall 4B.

Inside said housing 2 are provided at least two partition walls 8 providing in the space enclosed by said housing 2 different, zones, respectively, an inlet zone 9 in which said inlet 5 gives out, at least one intermediate zone 10 between two of said at least two walls 8, in which intermediate zone 10 said first outlet 6 gives out, and an outlet zone 11 in which said second outlet 7 gives out.

In this case said partition walls 8 are realized in the form of disc shaped elements extending transversally inside the space in said housing 2, the entire circumferential edge of each of these elements extending against the inner wall of said tubular casing 3.

According to the invention, each of said partition walls 8 is provided with at least one opening 12, which is in this case made in the shape of a circular opening 12. Said openings 12 do not necessarily need to be circular or approximately circular, as they might in fact show any shape, however, a circular shape shows the advantage that turbulences in the flow are minimized, thus reducing the pressure drop over the phase separator 1.

According to another characteristic of the invention, the circumferential edge of each of said openings 12 is positioned in all directions at a distance D from the circumferential edge 13 of the partition wall 8 through which these openings 12 extend, said distance D being greater than zero.

The above characteristic leads to the fact that said openings 12 are surrounded over 360° by a part of the respective wall 8 through which they extend.

In the example represented in figures 1 and 2, this is realized by providing said openings 12 centrally through each partition wall 8, however, this is not a strict requirement according to the invention as one or several of said openings 12 may as well be decentralized and also the openings 12 extending through subsequent partition walls 8 may be misaligned with respect to one another.

Either way, said openings 12 form a flow-through passage for the main stream of a multi-phase mixture entering the space in said housing 2 through the inlet 5.

According to a preferential characteristic of the invention, the distance D in each direction is at least 10%, and even better more than 20% of the distance between the point of gravity of said opening and the circumferential edge of the partition wall 8, in said respective direction.

This characteristics shows the important advantage that the effect of a quiet flow zone is optimally achieved over a 360° range around the main stream of the multi-phase mixture.

As shown in figure 1, said first outlet 6 could be connected to a device 14 tor removal of a separated phase, said device 14 in this case consisting of an automatic degassing valve as might be found in classic central heating installations for automatically blowing off collected gas bubbles. In this case said device is provided on top of said housing 2, however, this is no absolute requirement as it might as well be positioned elsewhere on said housing 2.

Also said device 14 does not necessarily need to be a degassing valve as it might as well be some sort ot draining valve, for example for removal of solid phase particles which are being extracted from the multi-phase mixture such as a mixture of a liquid and solid particles or a mixture of a gas stream with solid particles. It is clear that in such case, this device 14 would preferably be positioned near the bottom side of the phase separator 1.

The working of a phase separator according to the invention is very simple and as follows.

A multi-phase mixture, for example a mixture of water with air bubbles in it, is led inside the space in said housing 2 through said inlet 5 and into said inlet zone 9.

Subsequently, said water-air mixture flows through the opening 12 in the first partition wall 8 and enters the intermediate zone 10 between this first partition wall 8 and a second partition wall 8.

As the circumferential edge of the openings 12 in said partition walls 8 are situated in all directions at a distance from the circumferential edge of said respective partition walls 8, a quiet flow zone is formed between the respective partition walls 8, said quiet flow zone surrounding the central flow-through passage.

In said quiet flow zone, air bubbles present in the water have a chance to rise and to be collected near said first outlet 6 to be blown off through the automatic degassing valve. Due to the specific construction of a phase separator 1 according to the invention, also air bubbles which are present near the bottom side of the main stream can be collected at the bottom side of the phase separator 1 and have a chance to rise, around the main passage, towards the first outlet 6.

It is clear that the distance between the respective partition walls 8 needs to be carefully chosen so as to preferably obtain the optimal situation of minimum pressure drop and maximum separation efficiency.

Subsequently, the water containing only a minor remaining portion of air bubbles, leaves the intermediate zone 10 and flows into the outlet zone 11 to finally leave the phase separator 1 through the second outlet 7.

Tests have shown that the construction of a phase separator 1 according to the invention leads to considerably better results with respect to the efficiency of the separation of phases than classic phase separators, while the pressure drop over such phase separator 1 according to the invention is very limited.

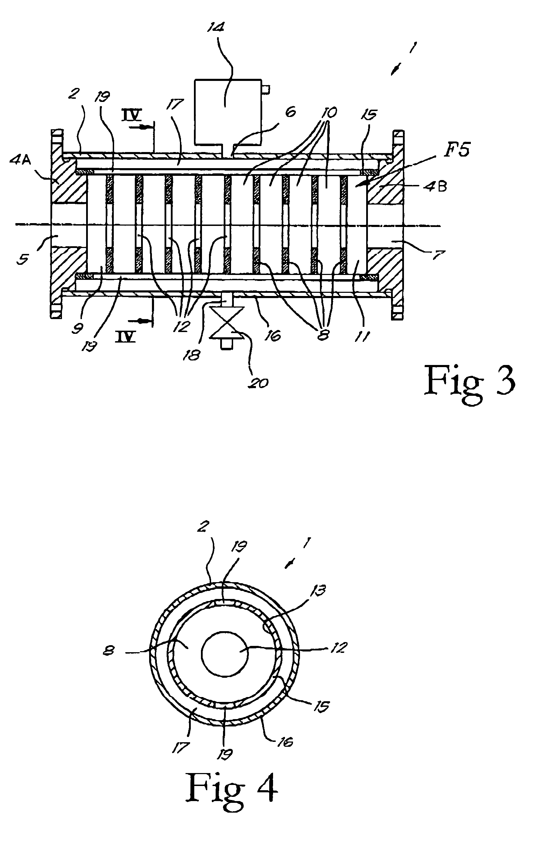

In order to increase the separation efficiency, additional partition walls 8 could be placed in the flow path of the multi-phase mixture, creating a number of quiet flow zones, each extending between two successively placed partition walls 8 and each being connected either to a separate first outlet 6, or to a common first outlet 6, for example as can be seen in the embodiment of figures 3 and 4.

This second form of embodiment differs from the embodiment shown in figures 1 and 2 in that said housing 2 is now made double walled. To this aim, said housing 2 comprises an inner tube forming an inner wall 15 and an outer tube forming an outer wall 16.

In the space enclosed by said housing 2 are placed the partition walls 8 in a transversal or approximately transversal direction with respect to the main flow direction of the multi-phase mixture flowing through the phase separator 1 from the inlet 5 to the second outlet 7.

In this example, there are nine partition walls 8 and between every two successive partition walls 8 is formed a respective intermediate zone 10. It is clear that the invention is not limited as such and that any number of partition walls 8 can be applied, depending on the desired efficiency of the phase separator 1. Also, the mutual distance between the respective partition walls 8 does not need to be constant but can be varied depending on the desired flow pattern.

The circumferential edges of the disc-shaped partition walls 8 are in close contact with said inner wall 15.

Said first outlet 6 gives out into the respective intermediate zones 10 by means of a collector 17 extending between said inner wall 15 and said outer wall 16 of said double walled housing 2.

Furthermore, the phase separator according to figures 3 and 4 is provided with a further, third outlet 18 which, in this case, also gives out into said respective intermediate zones 10 by means of the collector 17.

In this embodiment, said first outlet 6 and said third outlet 18 are placed on opposite sides of said phase separator 1, as the first outlet 6 is positioned on top of the housing 2, while said third outlet 18 is positioned at the bottom side of the housing 2, i.e. as shown in the figures which is the preferential orientation of such particular phase separator 1 for separating gas bubbles and solid particles from a water stream when in use.

Obviously such a further, third outlet 18 could be provided on a phase separator 1 with any number of partition walls 8 and might therefore as well be implemented in the embodiment shown in the previously discussed figures 1 and 2. In this case said third outlet 18 would directly give out into the sole intermediate zone 10.

Returning now to figures 3 and 4, the connection between the respective intermediate zones 10 and the collector 17 is made in the form of one or several openings 19 extending through the inner wall 15 of the housing 2, and in this case in the form of two opposing longitudinal slots extending through this inner wall 15.

Finally, as shown in figure 3, a drain valve 20 is connected to said third outlet 18 for draining a phase collected at the bottom of the phase separator 1 during the use thereof.

The working principle of a phase separator 1 as shown in figures 3 and 4 is the same as described above with respect to the embodiments of figures 1 and 2, however, in this case the phase separator 1 can be used for separating three different phases.

As a mixture of for example water with gas bubbles and solid dirt particles therein enters the respective intermediate zones 10 between the respective partition walls 8, gas bubbles are collected at the top of the housing in collector 17 and blown off by means of the automatic degassing valve and dirt particles are collected at the bottom of the phase separator 1, also in the collector 17.

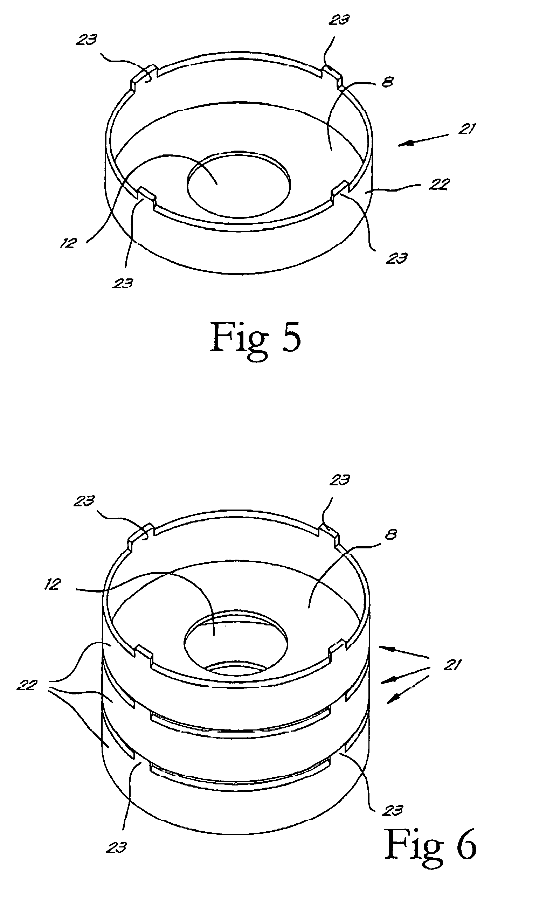

Figures 5 and 6 represent a practical way of realizing the partition walls 0 and the inner wall 15.

In this example, said partition wall 8 is formed of the perforated bottom wall of a cup shaped element 21, whereby, upon said bottom wall is provided, mainly at its circumferential edge, a standing side wall 22.

On the free edge of said standing side wall 22 are provided a number of extensions 23, for example in the form of lips.

In order to arrive at a construction generally equivalent to the construction as shown in figure 3, a number of elements 21 are superposed in a manner as shown in figure 6, such that the bottom wall of each respective element 21 rests against the extensions 23 of a following element 21, thus forming a number of openings at the respective free edges of the standing side walls 22 of the respective elements 21.

Said elements 21 could be connected to each other by any suitable connection technique such as gluing, wielding, clicking, screwing or the like.

Advantages of this specific manner of constructing a phase separator 1 is that such elements 21 can be superposed in a modular manner, thus allowing to easily adapt the phase separator to specific requirements by adding or removing elements 21 as desired. Also, said elements 21 can be easily replaced by other elements 21 for the purpose of maintenance or for adjusting the influence of the elements 21 on the flow pattern and the quiet flow zones.

Also, said elements 21 could be provided in a sleeve, keeping all elements 21 together. In this case, said sleeve needs to be provided with openings allowing a passage of separated phase from the intermediate zone or zones 10 to the first and/or third outlet 6 and/or 18.

In this case, the openings 12 through the bottom walls are all positioned centrally and are all aligned with respect to one another. Also, each of these openings 12 is made in the form of a circular opening.

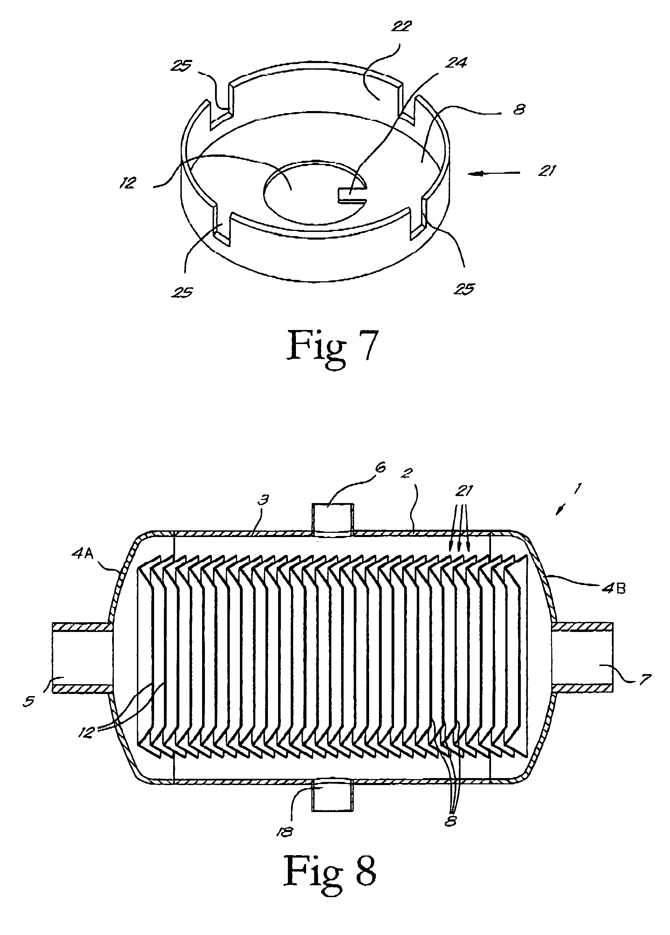

As can for example be seen in figure 7, said openings 12 do not necessarily need to be circular as they might show basically any shape. In the example of figure 7 opening 12 is provided with an inwardly directed part 24 allowing for certain flow alterations to take place in the multi-phase mixture.

When superposing a number of such elements 21. as shown in figure 7, the inwardly directed parts 24 of successively placed elements 21 can be directed according to different directions, thus allowing an alteration and improvement of the flow path through the phase separator 1, leading to increased efficiency.

The inwardly directed part 24 does not necessarily have to be positioned in the same plane as the bottom wall of the element 21. Also, the enclosed angle between said standing side wall 22 and said bottom wall does not necessarily have to be 90° as it can also be a smaller or a greater angle. Said bottom wall can also be realized in the shape of a cone as it does not need to be completely flat as In figure 7. Obviously, any number of inwardly directed parts 24 can be provided.

In this case the standing side wall 22 is not provided with extensions 23 as is the case in figures 5 and 6, but a number of opening 25 are provided in said side wall 22, thus obtaining basically the same effect as shown in figure 6, when superposing several elements 21 as shown in figure 5.

As already discussed above, the openings 12 of the respective partition walls 8 do not need to be centralized and these openings 12 can also be misaligned with respect to one another.

Decentralization and misalignment of the respective openings 12 shows the advantage that additional turbulences are being created, allowing a further optimization of the separation efficiency.

In figure 8 is represented an alternative embodiment of a phase separator 1 according to the invention, whereby the housing 2 comprises two lid-shaped side walls 4A and 4B in stead of the flange shaped end walls as shown in the embodiments shown in figures 1 and 3.

As also shown in figure 8, it is clear that the elements 21 may be realized in various forms, as in this particular case in a waveform. Starting from a cup shaped element 21 as described above, the represented waveform can be considered as a variant of which the standing side wall 22 is given a V-shape, whereby one leg of the V-shaped side wall 22 is connected to the actual partition wall 8, and whereby the free extremity of the other leg of the V-shaped side wall 22 forms the circumferential edge of the element 21.

Obviously, also in this embodiment, each partition wall shows an opening 12 forming a passage for the main stream of a multi-phase mixture through the phase separator 1.

In all of the embodiments of a phase separator 1 as shown in figures 1, 3 and 8, the housing 2 shows a mainly horizontal setup, meaning that the longitudinal axis of said housing 2 is oriented in the same or approximately the same direction as the flow direction of the main stream of the multi-phase mixture flowing through the phase separator 1.

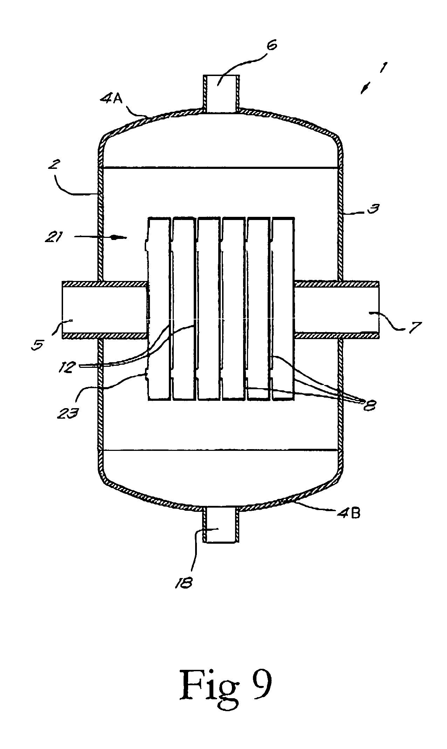

Figure 9 represents an alternative embodiment of a phase separator 1 according to the invention, whereby the housing 2 in this case shows a vertical setup since the longitudinal axis of the housing 2 is directed crosswise the flow direction of the main stream flowing through the phase separator 1.

In this case, the inlet 5 and the second outlet 7 do not extend through end walls, but extend through the tubular casing 3, while the first outlet 6 and the third outlet 18 extend through the end walls 4A and 4B.

The partition walls 8 are realized by making use of cup shaped elements 21 as shown in figures 5 and 6.

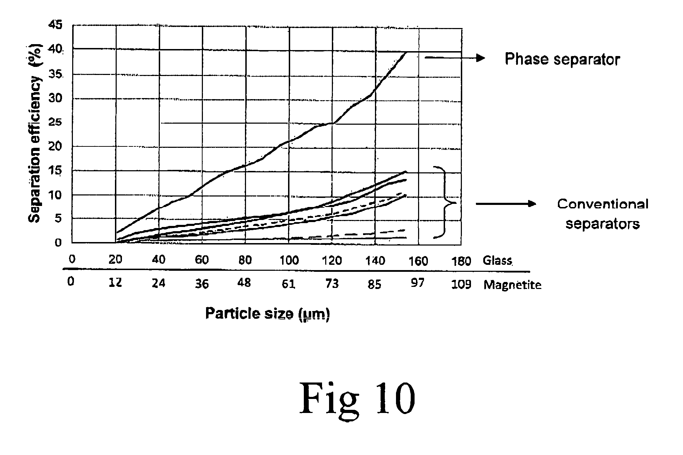

Figure 10 shows a comparative graphical representation of the separation efficiency for several phase separators of the prior art and a phase separator according to the present invention.

The multi-pluase mixture in the comparative test existed of a fluid with solid particles, more in particular water comprising pearls of glass. The efficiency is set out as a function of the particle size.

The separation efficiency can be calculated by dividing the number of separated solid particles by the number of solid particles entering the phase separator 1.

All measurements were conducted with a flow speed of the multi-phase mixture of 1 m/sec. First the measurements were conducted for glass particles and, subsequently, an extrapolation was made using Stokes' Law, for magnetite particles.

The uppermost curve is representative for the phase separator 1 according to the invention, while the lower curves are representative for traditional phase separators.

As can readily be seen from this graph, the reparation efficiency of a phase separator 1 according to the invention is considerably higher than for traditional phase separators, even for very small particle sizes.

The invention is in no way limited to the forms of embodiment described above, by way of example, as a phase separator according to the invention can be made in all shapes and dimensions, without departure from the scope of the invention.

## Claims

1. Phase separator comprising a housing (2) with an inlet (5) for a multi-phase mixture, a first outlet (6) for removal of a first separated phase and a second outlet (7) for removal of a second separated phase, where inside said housing (2) are provided at least two partition walls (8) providing in the space enclosed by the said housing (2) different zones respectively, an inlet zone (9) in which said inlet (5) gives out, at least one intermediate zone (10) between two of said at least two walls (8), in which intermediate zone (10) said first outlet (6) gives out, and an outlet zone (11) in which said second outlet (7) gives out, **characterized in that** each of said walls (8) is provided with at least one opening (12) forming a flow-through passage for the main stream of the multi-phase mixture from the inlet (5) to the second outlet (7), the circumferential edge of the at least one opening for at least 75% of its total or added up length being positioned at a distance from the circumferential edge of the wall through which these openings extend.

2. Phase separator according to claim 1, **characterized in that** the circumferential edge ot each of said openings (12) are in all directions positioned at a distance (D) from the circumferential edge of the wall (8) through which these openings (12) extend.

3. Phase separator according to claim 1, **characterized in that** it is provided with one or more further outlets (18) which give out into said intermediate zone (10).

4. Phase separator according to claim 1, **characterized in that** said openings (12) arc circular or approximately circular.

5. Phase separator according to claim 1, **characterized in that** one or more of said openings (12) extending through a partition wall (8) are decentralized.

6. Phase separator according to claim 5, **characterized in that** the openings (12) extending through two of said partition walls (8) are misaligned with respect to each other.

7. Phase separator according to claim 1, **characterized in that** said partition walls (8) extend transversally or approximately transversally to the main flow direction of a multi-phase mixture that would be led through said phase separator (1).

8. Phase separator according to claim 1, **characterized in that** said housing (2) is double walled.

9. Phase separator according to claim 8, **characterized in that** said first outlet (6) gives out into the intermediate (10) zone by means of a collector (17) extending between an inner and outer wall (15, respectively 16) of said double walled housing (2).

10. Phase separator according to claim 9, **characterized in that** it is provided with one or more further outlets (18) which also give out into said intermediate zone (10) by means of said collector (17).

11. Phase separator according to claim 8, **characterized in that** said partition walls (8) are formed by the respective perforated bottom walls of superposed cup shaped elements (21).

12. Phase separator according to claim 11, **characterized in that** said cup shaped elements (21) comprise a bottom wall and, mainly on the circumferential edge thereof, a standing side wall (22), and **in that** on the free edge of said standing side wall (22) are provided one or more extensions (23).

13. Phase separator according to claim 12, **characterized in that** in said side wall (22) are provided one or more openings (25).

14. Phase separator according to claim 1, **characterized in that** one or more of said openings (12) shows one or more inwardly directed parts (24).

15. Phase separator according to claim 1, **characterized in that** the distance D in each direction is at least 10% of the distance between the point of gravity ot said openings (12) and the circumferential edge of the partition wall (8) through which they extend, in said respective direction.
